# EUROPEAN PATENT SPECIFICATION

(11) **EP 3 514 362 B1**
(45) Date of publication and mention of the grant of the patent: **10.03.2021**
(21) Application number: 19152202.8
(22) Date of filing: 17.01.2019
(51) Int. Cl.: F02F 1/36, F01P 3/02, F02F 1/42, F01N 13/10, F02F 1/24

(54) **MULTI-CYLINDER ENGINE, AND CYLINDER HEAD**
MEHRZYLINDRIGER MOTOR UND ZYLINDERKOPF
MOTEUR MULTICYLINDRE ET TÊTE DE CYLINDRE

(30) Priority: 23.01.2018 JP 2018008519
(43) Date of publication of application: 24.07.2019
(73) Proprietor: Mazda Motor Corporation, Aki-gun, Hiroshima 730-8670 (JP)
(72) Inventor: HORII, Hideya, Aki-gun,, Hiroshima 730-8670 (JP); ISHIMOTO, Daijirou, Aki-gun,, Hiroshima 730-8670 (JP); TAKAHASHI, Masamichi, Aki-gun,, Hiroshima 730-8670 (JP)
(74) Representative: Müller-Boré & Partner Patentanwälte PartG mbB

(56) References cited:
- EP-A1- 2 003 320
- EP-A1- 2 660 452
- WO-A1-2006/004469
- DE-A1-102012 221 941
- JP-U- S56 101 444

## Description

### TECHNICAL FIELD

The present disclosure relates to a multi-cylinder engine, a cylinder head, and particularly to a cylinder-head structure of the multi-cylinder engine.

### BACKGROUND OF THE DISCLOSURE

JP2000-265905A discloses an engine for a vehicle, which adopts a structure in which a plurality of independent exhaust passage parts (i.e., exhaust ports) connected to respective cylinders, a collective exhaust passage part (i.e., a port collecting part) which collects the plurality of independent exhaust passage parts, are provided inside a cylinder head. In this engine, two exhaust passage groups each having the plurality of independent exhaust passage parts and the collective exhaust passage part, are disposed inside the cylinder head.

Each of the exhaust passage groups has an opening of the collective exhaust passage part provided in a side surface part of the cylinder head. The openings of each collective exhaust passage part are connected to an exhaust pipe.

In the engine disclosed in JP2000-265905A, a thermal load may increase in an area of the cylinder head between the collective exhaust passage part of one exhaust passage group, and the collective exhaust passage part of the other exhaust passage group. That is, exhaust gas flows in the limited area of the cylinder head, alternately between the two adjacent collective exhaust passage parts while the engine is operating.

When the thermal load of the partial area of the cylinder head increases, the heat may distort the cylinder head or adversely influences on peripheral instruments.
DE 10 2012 221941 A1 discloses a manifold which has manifold arms with an exhaust gas inlet for connecting with a cylinder outlet of an internal combustion engine
EP2660452 A1 discloses a multi cylinder engine with a cooling medium passage provided between first and second collective exhaust passage parts.

### SUMMARY OF THE DISCLOSURE

The present disclosure is made in view of solving the above problems, and one purpose thereof is to reduce a thermal load in an area of a cylinder head between collective exhaust passage parts of exhaust passage groups.

According to one aspect of the present disclosure, a multi-cylinder engine is defined in claim 1.

According to this structure, in the cylinder head of the engine body, the intermediate passage part of the cooling medium passage is formed at least between the first and second collective exhaust passage parts. Thus, in the engine, heat generated from the first collective exhaust passage part and heat generated from the second collective exhaust passage part are absorbed by the intermediate passage part of the cooling medium passage.

Thus, the engine is provided in the cylinder head with the two exhaust passage groups having the collective exhaust passage parts, respectively, and reduces a thermal load in an area between the collective exhaust passage parts in the cylinder head.

The cooling medium passage may further include a first upper passage part provided to at least an upper part of the first collective exhaust passage part, and a second upper passage part provided to at least an upper part of the second collective exhaust passage part. Particularly, the cooling medium passage may further include at least one of a first upper passage part provided to at least an upper part of the first collective exhaust passage part, and a second upper passage part provided to at least an upper part of the second collective exhaust passage part.

According to this structure, since the cooling medium passage has the first upper passage part and the second upper passage part, the heat transmitted upward from the first collective exhaust passage part and the heat transmitted upward from the second collective exhaust passage part are absorbed by the first and second upper passage parts. Therefore, the engine may reduce the thermal load at the upper parts of the areas in the cylinder head where the collective exhaust passage parts are disposed.

The cooling medium passage may further include a first lower passage part provided to at least a lower part of the first collective exhaust passage part, and a second lower passage part provided to at least a lower part of the second collective exhaust passage part. Particularly, the cooling medium passage may further include at lease one of a first lower passage part provided to at least a lower part of the first collective exhaust passage part, and a second lower passage part provided to at least a lower part of the second collective exhaust passage part.

According to this structure, since the cooling medium passage has the first lower passage part and the second lower passage part, the heat transmitted downward from the first collective exhaust passage part and the heat transmitted downward from the second collective exhaust passage part are absorbed by the first and second lower passage parts. Therefore, the engine may reduce the thermal load at the lower parts of the areas in the cylinder head where the collective exhaust passage parts are disposed.

Each of the first collective exhaust passage part and the second collective exhaust passage part has an opening in a side surface part of the cylinder head. In a plan view of the second exhaust passage group in cylinder axis directions, the opening of the second collective exhaust passage part of the is offset toward the first exhaust passage group in a lineup direction of the second plurality of independent exhaust passage parts. In a plan view of the first exhaust passage group in the cylinder axis directions, the opening of the first collective exhaust passage part is disposed closer to a center in the lineup direction of the first plurality of independent exhaust passage parts, compared with the opening of the second collective exhaust passage part.

According to this structure, the location of the opening of the first collective exhaust passage part, and the location of the opening of the second collective exhaust passage part differ from each other, and an area where the intermediate passage part is formed is secured between the collective exhaust passage parts. Therefore, it is advantageous to reduce the thermal load in the area between the collective exhaust passage parts in the cylinder head.

The multi-cylinder engine may further include a first exhaust-pipe part connected to the opening of the first collective exhaust passage part, and a second exhaust-pipe part connected to the opening of the second collective exhaust passage part.

According to this structure, since the structure is adopted in which the first exhaust-pipe part and the second exhaust-pipe part are connected to the openings of the first and second collective exhaust passage parts, respectively, it is possible to reduce an exhaust resistance of the exhaust gas discharged from the openings.

The multi-cylinder engine may further include a collective exhaust-pipe part provided downstream in the exhaust gas flow direction of the first exhaust-pipe part and the second exhaust-pipe part, and collecting the first exhaust-pipe part and the second exhaust-pipe part, and a turbocharger provided downstream in the exhaust gas flow direction of the collective exhaust-pipe part.

According to this structure, since the turbocharger is provided downstream of the collective exhaust-pipe part, it can collect kinetic energy of the exhaust gas to improve the efficiency.

Fuel may be injected alternately over time to the first cylinder group and the second cylinder group.

According to this structure, since the fuel injection is performed alternately over time to the first cylinder group and the second cylinder group, exhaust interference can be reduced to achieve a higher exhaust efficiency.

Particularly, the intermediate passage part is formed along the first collective exhaust passage part.

Further particularly, the intermediate passage part is formed close or adjacent to the first collective exhaust passage part.

Further particularly, the intermediate passage part is formed along the second collective exhaust passage part.

Further particularly, the intermediate passage part is formed close or adjacent to the second collective exhaust passage part.

Further particularly, the cooling medium passage further includes at least one of an upper passage part provided above the first collective exhaust passage part and/or the second collective exhaust passage part, and a lower passage part provided below the first collective exhaust passage part and/or the second collective exhaust passage part.

Further particularly, the multi-cylinder engine further comprises injectiors configureed to inject fuel alternately to the first cylinder group and the second cylinder group.

Further particularly, the multi-cylinder engine is to be mounted on a vehicle.

Further particularly, a cylinder head for a multi-cylinder engine having an engine body is provided. The engine body includes a first cylinder group comprised of a first plurality of cylinders disposed adjacent to each other, and a second cylinder group comprised of a second plurality of cylinders disposed adjacent to each other, and provided adjacent to the first cylinder group. The cylinder head includes a first exhaust passage group, a second exhaust passage group and a cooling medium passage. The first exhaust passage group has a first plurality of independent exhaust passage parts to be connected to the first cylinder group or the first plurality of cylinders, respectively, and a first collective exhaust passage part collecting the first plurality of independent exhaust passage parts downstream in an exhaust gas flow direction. The second exhaust passage group has a second plurality of independent exhaust passage parts to be connected to the second cylinder group or the second plurality of cylinders, respectively, and a second collective exhaust passage part collecting the second plurality of independent exhaust passage parts downstream in the exhaust gas flow direction. The cooling medium passage has an intermediate passage part provided between the first collective exhaust passage part and the second collective exhaust passage part.

### BRIEF DESCRIPTION OF DRAWINGS

Fig. 1 is a view schematically illustrating a structure of an engine for a vehicle according to one embodiment of the present disclosure.
Fig. 2 is a side view schematically illustrating the engine.
Fig. 3 is a front view schematically illustrating the engine.
Fig. 4 is a view schematically illustrating a structure of a water jacket formed in an engine body.
Fig. 5 is a perspective view schematically illustrating a cylinder head and a turbocharger which are removed from the engine.
Fig. 6 is a cross-sectional view schematically illustrating a structure of exhaust ports and a port collected part in the cylinder head, taken along a line VI-VI in Fig. 5.
Fig. 7 is a cross-sectional view schematically illustrating a spatial relationship between the port collected part and the water jacket in the cylinder head, taken along a line VII-VII in Fig. 5.
Fig. 8 is a cross-sectional view schematically illustrating a spatial relationship between the port collected part and the water jacket in the cylinder head, taken along a line VIII-VIII in Fig. 7.
Fig. 9 is a cross-sectional view schematically illustrating a spatial relationship between the port collected part and the water jacket in the cylinder head according to one modification.

### DETAILED DESCRIPTION OF THE DISCLOSURE

Hereinafter, one embodiment of the present disclosure is described, taking the accompanying drawings into consideration. Note that the form in the following description is one mode of the present disclosure, and therefore, the present disclosure is not to be limited by the following form at all except for the essential structure of the present disclosure.

Note that although detailed illustration of a vehicle is omitted in the drawings used below, a +Z side is upward in up-and-down directions of the vehicle or the engine, and a -Z side is downward in the up-and-down directions of the vehicle or the engine.

### [Embodiment]

### 1. Outline Structure of Multi-cylinder Engine 2

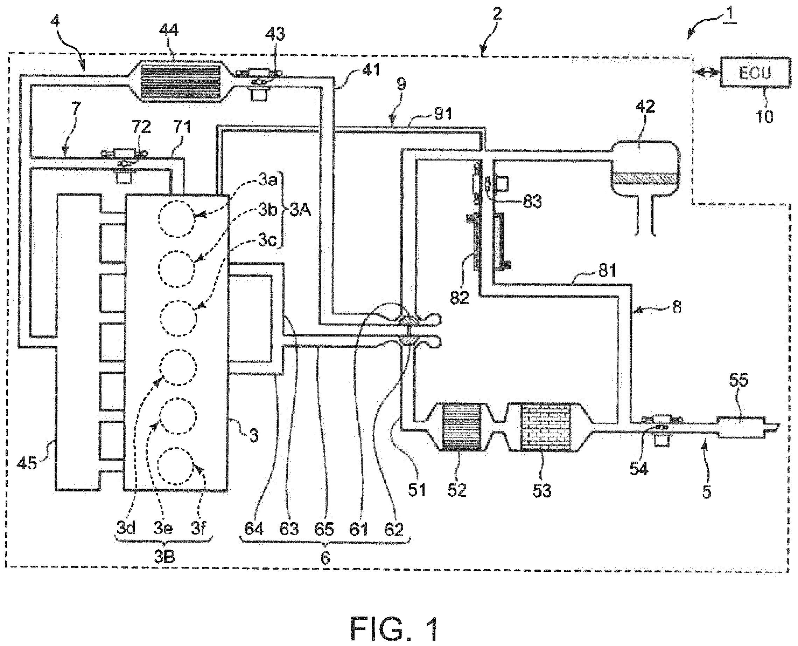

An outline structure of a multi-cylinder engine 2 (hereinafter, simply referred to as "the engine") is described using Fig. 1.

As illustrated in Fig. 1, a vehicle 1 according to this embodiment includes, in addition to the engine 2 mounted on the vehicle 1, an ECU (Engine Control Unit) 10 which executes a driving control of the engine 2.

The engine 2 includes an engine body 3, an intake system 4, an exhaust system 5, and a turbocharger 6. In this embodiment, the engine body 3 adopts a multi-cylinder diesel engine having six cylinders 3a-3f, as one example.

The intake system 4 has an intake passage 41 connected to intake ports (not illustrated) of the engine body 3. An air cleaner 42 is provided at an upstream end of the intake passage 41, and fresh air is taken into the intake passage 41 through the air cleaner 42.

The intake passage 41 is provided with a compressor 61 of the turbocharger 6, a throttle valve 43, an intercooler 44, and a surge tank 45. Air flowing through the intake passage 41 is boosted by the compressor 61 of the turbocharger 6, and is then sent to the intercooler 44 through the throttle valve 43. The intercooler 44 cools the air which is increased in temperature due to the compression by the compressor 61.

Opening and closing of the throttle valve 43 is controlled during operation of the engine 2 so that the throttle valve 43 fundamentally maintains being in or near a fully-open state. The throttle valve 43 is closed only when it is necessary, e.g., when the engine 2 is stopped.

The surge tank 45 is provided immediately in front of a connection of the intake system 4 with the intake ports (not illustrated) of the engine body 3 to equalize an inflow air amount to the cylinders 3a-3f.

The exhaust system 5 has an exhaust passage 51 which is connected at one end to the part where a turbine 62 of the turbocharger 6 is provided. The exhaust passage 51 is provided with a DOC (Diesel Oxidation Catalyst) 52, a DPF (Diesel Particulate Filter) 53, an exhaust shutter valve 54, and a silencer 55.

The DOC 52 detoxicates CO and HC in exhaust gas discharged from the engine body 3 by oxidizing, and the DPF 53 captures particulates, such as soot, contained in the exhaust gas. The exhaust shutter valve 54 is provided between the DPF 53 and the silencer 55 in the exhaust passage, which is a valve to control a flow rate of the exhaust gas discharged outside through the silencer 55.

The turbocharger 6 includes, in addition to the compressor 61 and the turbine 62, a casing passage part 63 (i.e., a first exhaust-pipe part), a casing passage part 64 (i.e., a second exhaust-pipe part), and a casing collected part 65 (i.e., a collective exhaust-pipe part). The casing passage part 63 is connected to a first cylinder group 3A comprised of the cylinders 3a-3c, and the casing passage part 64 is connected to a second cylinder group 3B comprised of the cylinders 3d-3f. The casing collected part 65 is a pipe part at which the casing passage part 63 and the casing passage part 64 are collected, and is connected to the part where the turbine 62 is provided.

The engine 2 further includes an HP-EGR (High Pressure-Exhaust Gas Recirculation) device 7, an LP-EGR (Low Pressure-Exhaust Gas Recirculation) device 8, and a blowby gas device 9. The HP-EGR device 7 has an HP-EGR passage (EGR passage) 71. The HP-EGR passage 71 is provided so as to connect the intake passages 41 to the cylinder head of the engine body 3. Note that the connected part of the HP-EGR passage 71 to the intake passage 41 is located between the surge tank 45 and the intercooler 44. An EGR valve 72 is provided to the HP-EGR passage 71. The EGR valve 72 adjusts the flow rate of the exhaust gas recirculated to the intake passage 41.

The LP-EGR device 8 has an LP-EGR passage 81. The LP-EGR passage 81 is provided so as to connect the exhaust passage 51 to the intake passage 41. The connected part of the LP-EGR passage 81 to the exhaust passage 51 is located between the DPF 53 and the exhaust shutter valve 54. The connected part of the LP-EGR passage 81 to the intake passage 41 is located between the air cleaner 42 and the compressor 61 of the turbocharger 6.

An EGR cooler 82 and an EGR valve 83 are provided to the LP-EGR passage 81. The EGR valve 83 adjusts the flow rate of the exhaust gas recirculated to the intake passage 41, similar to the EGR valve 72 in the HP-EGR device 7. The EGR cooler 82 is provided in order to cool the exhaust gas to be recirculated to the intake passage 41.

The blowby gas device 9 has a blowby gas passage 91. The blowby gas passage 91 is provided so as to connect a head cover of the engine body 3 to the intake passage 41. The blowby gas passage 91 returns the blowby gas generated inside the engine body 3 to the intake passage 41.

The ECU 10 executes, for example, a control of fuel-injection timing in the engine body 3, and an opening-and-closing control of the various valves 43, 54, 72, and 83.

### 2. Outside Structure of Engine 2

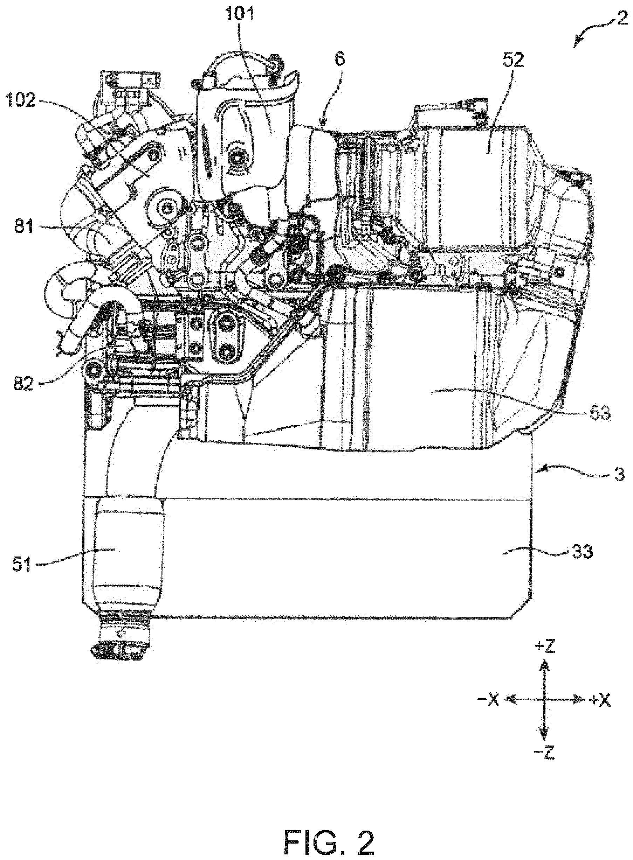

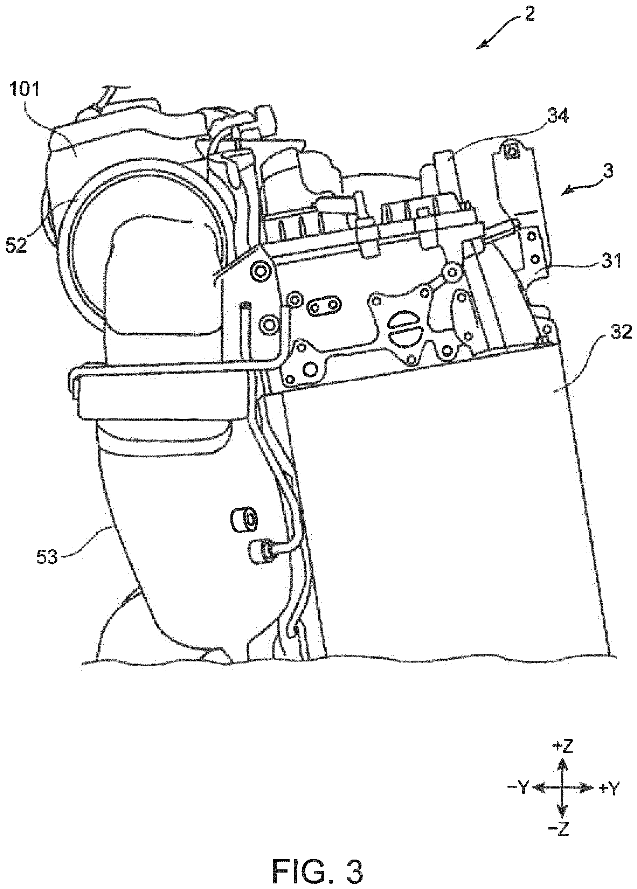

The outside structure of the engine 2 is described using Figs. 2 and 3. Fig. 2 is a side view schematically illustrating the engine 2, and Fig. 3 is a front view schematically illustrating the engine 2.

As illustrated in Figs. 2 and 3, the LP-EGR passage 81 and the EGR cooler 82 of the LP-EGR device 8, the DOC 52 and the DPF 53 of the exhaust system 5, and the turbocharger 6 are disposed along a side surface part on the -Y side of the engine body 3 of the engine 2. The LP-EGR passage 81 is provided so as to connect an upstream partof the compressor 61 (see Fig. 1) of the turbocharger 6 disposed on the +Z side to a downstream part of the DPF 53 disposed on the -Z side. The EGR cooler 82 is disposed substantially in the Z-directions.

As illustrated in Fig. 2, the exhaust system 5 is curved in a substantially U-shape between the DOC 52 and the DPF 53. The exhaust passage 51 is bent at a part downstream of the DPF 53 (downstream in the exhaust gas flow direction) to the -Z side (toward an oil pan 33 of the engine body 3) and to the -Y side (toward a viewer of Fig. 2).

As illustrated in Fig. 3, the DOC 52 of the exhaust system 5 is disposed on the -Y side of and close to a cylinder-head 31 and a head cover 34 of the engine body 3. The DPF 53 is disposed on the -Y side of and close to a cylinder block 32 of the engine body 3.

As illustrated in Fig. 2, a cover 101 and a cover 102 are disposed on the -X side of the turbocharger 6. These covers 101 and 102 are insulated.

In this embodiment, a variable displacement turbocharger is adopted as the turbocharger 6. Thus, the turbocharger has a VGT (variable geometry turbine) actuator which varies the displacement (detailed illustration is omitted). The cover 101 is provided in order to protect the VGT actuator from heat radiated from the engine body 3 and the DPF 53 which are located nearby.

Similarly, the cover 102 is provided in order to protect the EGR valve 83 (illustration is omitted in Figs. 2 and 3) of the LP-EGR device 8 from the heat radiated from the engine body 3 and the DPF 53 which are located nearby. Note that the covers 101 and 102 may be separately or integrally formed.

### 3. Water Jackets 11, 12, 15, and 16 of Engine Body 3

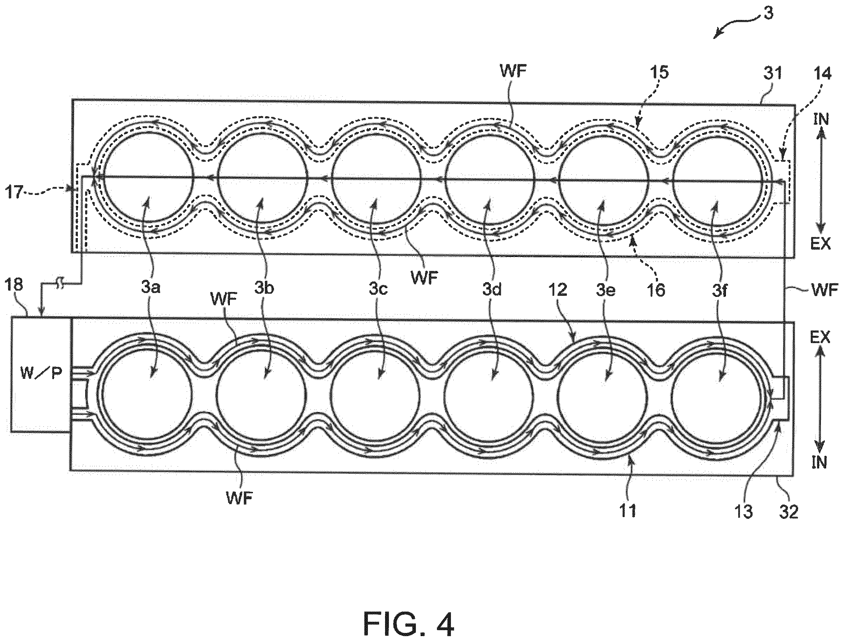

Outline structure of water jackets 11, 12, 15, and 16 of the engine body 3 is described using Fig. 4, which is a view schematically illustrating the water jackets 11, 12, 15, and 16 of the engine body 3.

As illustrated in Fig. 4, a water pump 18 which pumps a coolant (i.e., a cooling medium) WF is attached to the engine body 3. In Fig. 4, although the water pump 18 is illustrated as attached to the cylinder block 32, the water pump 18 may be disposed at any other locations.

In the cylinder block 32, the intake-side water jacket 11 is formed along the intake side (IN side) of the cylinders 3a-3f and the exhaust-side water jacket 12 is formed along the exhaust side (EX side) of the cylinders 3a-3f. The coolant WF is supplied from the water pump 18 to each end part of the intake-side water jacket 11 and the exhaust-side water jacket 12 on the cylinder 3a side.

Moreover, an outlet part 13 is formed at an end of the cylinder block 32 on the cylinder 3f side, and the intake-side water jacket 11 and the exhaust-side water jacket 12 join to each other at the outlet part 13.

The outlet part 13 of the cylinder block 32 is connected to an inlet part 14 of the cylinder head 31. The inlet part 14 of the cylinder head 31 is formed at an end on the cylinder 3f side. The inlet part 14 is connected to the intake-side water jacket 15 formed along the intake side (IN side) of the cylinders 3a-3f in the cylinder head 31, and the exhaust-side water jacket 16 formed along the exhaust side (EX side) of the cylinders 3a-3f.

An outlet part 17 is formed at an end of the cylinder head 31 on the cylinder 3a side, and the intake-side water jacket 15 and the exhaust-side water jacket 16 join to each other at the outlet part 17. The outlet part 17 is connected to the water pump 18.

As illustrated in Fig. 4, the coolant WF pumped from the water pump 18 passes through the intake-side water jacket 11 and the exhaust-side water jacket 12 of the cylinder block 32, and flows into the outlet part 13. Then, the coolant WF which flowed in the water jackets 11 and 12 of the cylinder block 32 is sent to the inlet part 14 of the cylinder head 31, passes through the intake-side water jacket 15 and the exhaust-side water jacket 16, and is sent to the outlet part 17. The coolant WF sent to the outlet part 17 is returned to the water pump 18 via a radiator (not illustrated).

### 4. Spatial Relation between Cylinder Head 31 and Turbocharger 6

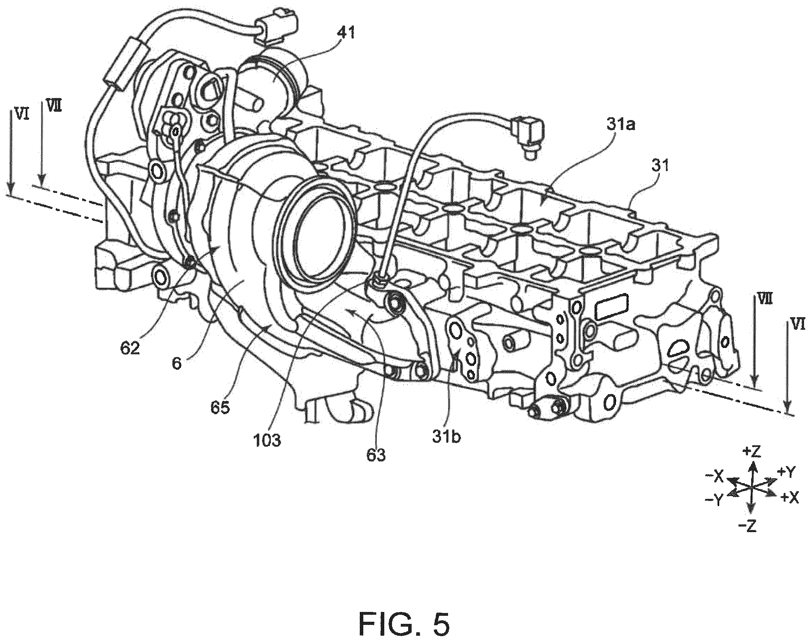

A spatial relation between the cylinder head 31 and the turbocharger 6 is described using Fig. 5. Fig. 5 is a perspective view schematically illustrating the cylinder head 31 and the turbocharger 6 which are removed from the engine 2.

As illustrated in Fig. 5, the cylinder head 31 has a substantially rectangular parallelepiped shape elongated in the X-directions. The +Z side of the cylinder head 31 is opened (i.e. an upper opening 31a), and is closed by the head cover 34 (see Fig. 3) attached thereto.

The turbocharger 6 is disposed along a side surface part 31b of the cylinder head 31 on the -Y side. The casing passage parts 63 and 64 (in Fig. 5, only the casing passage part 63 is illustrated for convenience of illustration) of the turbocharger 6 are connected to openings of the exhaust ports formed in the side surface part 31b of the cylinder head 31. This will be described later.

The casing collected part 65 following the casing passage parts 63 and 64 is bent to the +Z side at the -Y side of the casing passage parts 63 and 64. The casing collected part 65 is connected to the turbine 62.

Note that an exhaust gas temperature sensor 103 which detects the temperature of the exhaust gas is attached to the casing passage part 63.

### 5. Structures of Exhaust Ports 31c-31h and 31j-31o, and Port Collected Parts 31i and 31p of Cylinder Head 31

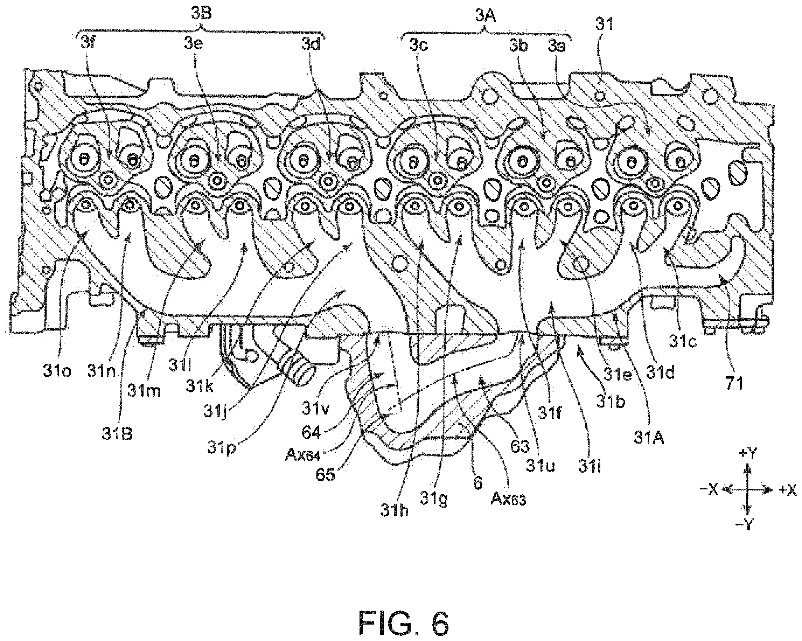

Structures of exhaust ports 31c-31h and 31j-31o and port collected parts 31i and 31p in the cylinder head 31 are described using Fig. 6. Fig. 6 is a schematic cross-sectional view taken along a line VI-VI in Fig. 5.

As illustrated in Fig. 6, in the engine body 3 according to this embodiment, from the +X side, a first cylinder 3a, a second cylinder 3b, a third cylinder 3c, a fourth cylinder 3d, a fifth cylinder 3e, and a sixth cylinder 3f are disposed in this order. Note that in Fig. 6, reference characters 3a-3f are assigned in order to indicate the locations corresponding to the cylinders 3a-3f in the cylinder head 31.

In this embodiment, a group comprised of the first cylinder 3a to the third cylinder 3c is referred to as the first cylinder group 3A, and a group comprised of the fourth cylinder 3d to the sixth cylinder 3f is referred to as the second cylinder group 3B. In the engine 2 according to this embodiment, the driving control is carried out so that fuel is not injected successively to the first cylinder 3a to the third cylinder 3c belonging to the first cylinder group 3A, and similarly, the fuel is not injected successively to the fourth cylinder 3d to the sixth cylinder 3f belonging to the second cylinder group 3B. For example, in the engine 2, the fuel is injected in the order of the first cylinder 3a => the fifth cylinder 3e => the third cylinder 3c => the sixth cylinder 3f => the second cylinder 3b => the fourth cylinder 3d. The engine 2 has injectors configured to inject the fuel. The injectors are provided to the cylinders 3a-3f, respectively.

The first cylinder 3 a is connected to the exhaust port 31c (independent exhaust passage part) and the exhaust port 31d (independent exhaust passage part). Similarly, the second cylinder 3b is connected to the exhaust port 31e (independent exhaust passage part) and the exhaust port 31f (independent exhaust passage part), and the third cylinder 3c is connected to the exhaust port 31g (independent exhaust passage part) and the exhaust port 31h (independent exhaust passage part).

The exhaust ports 31c-31h are collected at a port collected part 31i provided on the - Y side of the cylinder head 31. In this embodiment, the exhaust ports 31c-31h and the port collected part 31i are collectively referred to as a first exhaust port group 31A (i.e., first exhaust passage group). That is, in this embodiment, the exhaust passages provided corresponding to the first cylinder group 3A are referred to as the first exhaust port group 31A.

The casing passage part 63 of the turbocharger 6 is connected to the port collected part 31i of the first exhaust port group 31A. Specifically, the casing passage part 63 is connected to an opening 31u of the port collected part 31i on the exhaust gas downstream side.

The fourth cylinder 3d is connected to an exhaust port 31j (independent exhaust passage part) and an exhaust port 31k (independent exhaust passage part), and the fifth cylinder 3e is connected to an exhaust port 311 (independent exhaust passage part) and an exhaust port 31m (independent exhaust passage part), and the sixth cylinder 3f is connected to an exhaust port 31n (independent exhaust passage part) and an exhaust port 31o (independent exhaust passage part).

The exhaust ports 31j-31o are collected at a port collected part 31p provided on the - Y side of the cylinder head 31. In this embodiment, similarly to the above, the exhaust ports 31j-31o and the port collected part 31p are collectively referred to as a second exhaust port group 31B (i.e., second exhaust passage group).

The casing passage part 64 of the turbocharger 6 is connected to the port collected part 31p of the second exhaust port group 31B. Specifically, the casing passage part 64 is connected to an opening 31v of the port collected part 31p on the exhaust gas downstream side.

In the first exhaust port group 31A, in the X-directions, the opening 31u of the port collected part 31i is disposed substantially at the center in a range from a part where the exhaust port 31c is connected to the first cylinder 3a to a part where the exhaust port 31h is connected to the third cylinder 3c. In other words, as for the opening 31u of the port collected part 31i, the port collected part 31i is disposed on the -Y side of a part where the exhaust port 31f is connected to the second cylinder 3b. That is, in the first exhaust port group 31A, the exhaust ports 31c-31h have the same length (substantially the same length).

On the other hand, in the second exhaust port group 31B, in the X-directions, the opening 31v of the port collected part 31p is disposed so as to be offset to the +X side (toward the first exhaust port group 31A) from the center of a range from the part where the exhaust port 31j is connected to the fourth cylinder 3d to a part where the exhaust port 31o is connected to the sixth cylinder 3f. In other words, the opening 31v of the port collected part 31p is offset, with respective to the center of the exhaust ports 31j-31o in a lineup direction of the exhaust ports 31j-31o, toward the first exhaust passage group 31A in the lineup direction of the exhaust ports 31j-31o. More specifically, the opening 31v of the port collected part 31p is disposed on the +X side from the part where the exhaust port 31j is connected to the fourth cylinder 3d. Thus, a distance between the opening 31u of the port collected part 31i and the center of the exhaust ports 31c-31h in a lineup direction of the exhaust ports 31c-31h is less than a distance between the opening 31v of the port collected part 31p and the center of the exhaust ports 31j-31o in the lineup direction of the exhaust ports 31j-31o.

As illustrated in Fig. 6, the casing passage part 64 is formed so as to extend substantially linearly between the part connected to the port collected part 31p to the part connected to the casing collected part 65. That is, a central path (i.e., center axis) Ax₆₄ of the casing passage part 64 is formed substantially linearly between the opening 31 v of the port collected part 31p and the casing collected part 65.

On the other hand, the casing passage part 63 has a portion bent toward the -X side between the part connected to the port collected part 31i and the part connected to the casing collected part 65. That is, a central path Ax₆₃ of the casing passage part 63 is formed so as to be bent between the opening 31u of the port collected part 31i and the casing collected part 65.

As illustrated in Fig. 6, in the cylinder head 31 of the engine body 3, the HP-EGR passage 71 is selectively connected only to the exhaust port 31c. At least a part of the HP-EGR passage 71 is formed in the cylinder head 31.

The HP-EGR passage 71 extends to the +X side from the part connected to the exhaust port 31c, and is bent to the +Y side at a tip end portion thereof. The HP-EGR passage 71 is connected to a part on the +Y side of a junction part with the exhaust port 31d of the exhaust port 31c (on the upstream in the exhaust gas flow direction).

### 6. Relation between Port Collected Parts 31i and 31p and Exhaust-side Water Jacket 16 in Cylinder Head 31

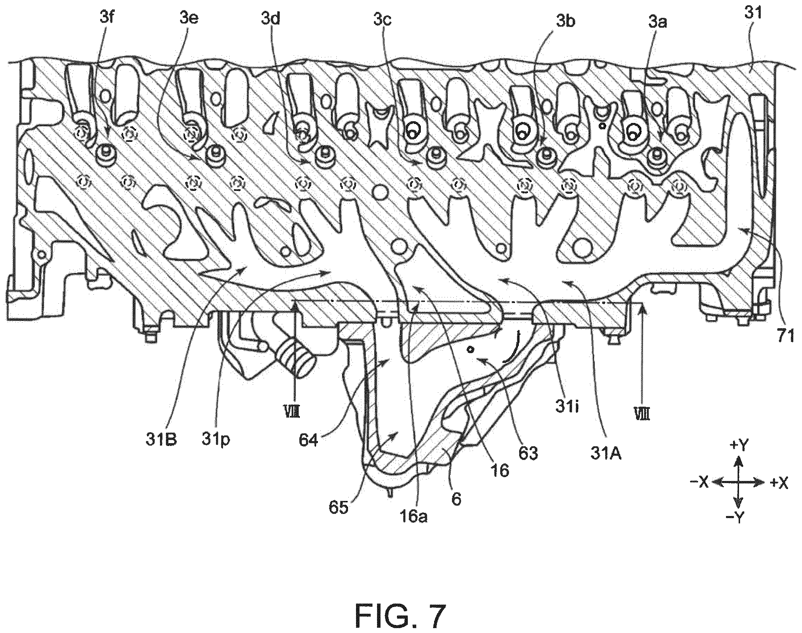

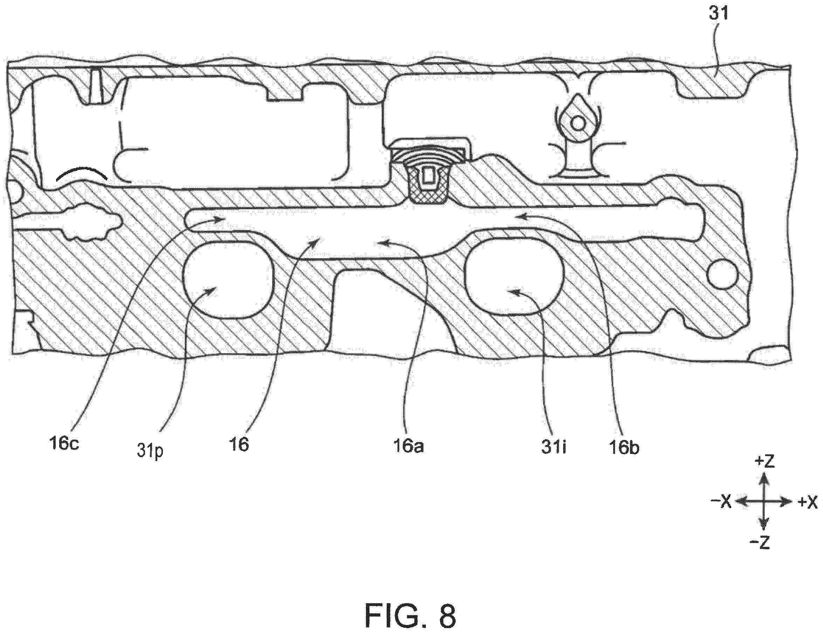

A relation between the port collected parts 31i and 31p and the exhaust-side water jacket 16 in the cylinder head 31 is described using Figs. 7 and 8. Fig. 7 is a schematic cross-sectional view taken along a line VII-VII in Fig. 5, and Fig. 8 is a schematic cross-sectional view taken along a line VIII-VIII in Fig. 7.

As illustrated in Fig. 7, in a plan view of the cylinder head 31 in the Z-directions (cylinder axis directions), the port collected part 31i of the first exhaust port group 31A and the port collected part 31p of the second exhaust port group 31B are disposed so as to be separated from each other. An intermediate passage part 16a of the exhaust-side water jacket 16 is formed in an area between the port collected part 31i and the port collecting part 31p.

The coolant WF flows in the exhaust-side water jacket 16 via the intermediate passage part 16a.

As illustrated in Fig. 7, the intermediate passage part 16a of the exhaust-side water jacket 16 is formed along the port collected part 31i, and formed along the port collected part 31p. Particularly, the intermediate passage part 16a of the exhaust-side water jacket 16 is formed close or adjacent to the port collected part 31i, and formed close or adjacent to the port collected part 31p. Further particularly, the intermediate passage part 16a of the exhaust-side water jacket 16 is formed close or adjacent to and along a side wall part of the port collected part 31i on the -X side, and formed close or adjacent to and along a side wall part of the port collected part 31p on the +X side.

As illustrated in Fig. 8, the exhaust-side water jacket 16 of the cylinder head 31 includes an upper passage part 16b (i.e., a first upper passage part) formed on the +Z side (upward in the up-and-down directions) of the port collected part 31i, and an upper passage part 16c (i.e., a second upper passage part) formed on the +Z side (upward in the up-and-down directions) of the port collected part 31p. In other words, the exhaust-side water jacket 16 of the cylinder head 31 includes at leaset one of the upper passage part 16b formed above the port collected part 31i, and the upper passage part 16c formed above the port collected part 31p.

The upper passage parts 16b and 16c are communicated with the intermediate passage part 16a so that the coolant WF flows therethrough.

### 7. Effects

According to the engine 2 of this embodiment, as described using Figs. 7 and 8, in the cylinder head 31 of the engine body 3, the intermediate passage part 16a of the exhaust-side water jacket 16 is formed at least between the port collected part 31i of the first exhaust port group 31A and the port collected part 31p of the second exhaust port group 31B. Thus, in the engine 2 according to this embodiment, the heat generated from the port collected part 31i of the first exhaust port group in the cylinder head 31 and the heat generated from the port collected part 31p of the second exhaust port group 31B are absorbed by the intermediate passage part 16a of the exhaust-side water jacket 16.

Therefore, the engine 2 according to this embodiment is provided in the cylinder head 31 with the two exhaust port groups 31A and 31B having the port collected parts 31i and 31p, respectively, and reduces the thermal load in the area between the port collected part 31i and the port collected part 31p in the cylinder head 31.

Moreover, in the engine 2 according to this embodiment, as described using Fig. 8, since the exhaust-side water jacket 16 has the upper passage parts 16b and 16c, the heat transmitted to the +Z side from the port collected part 31i of the first exhaust port group 31A and the heat transmitted to the +Z side from the port collected part 31p of the second exhaust port group 31B are absorbed by the upper passage parts 16b and 16c. Therefore, the engine 2 according to this embodiment may reduce the thermal load at +Z side parts of the areas in the cylinder head 31 where the port collected parts 31i and 31p are disposed.

Moreover, in the engine 2 according to this embodiment, as described using Fig. 6, the location in the X-directions of the opening 31u of the port collected part 31i in the first exhaust port group 31A, and the location in the X-directions of the opening 31v of the port collected part 31p in the second exhaust port group 31B differ from each other, and the area where the intermediate passage part 16a is formed is secured between the port collected part 31i and the port collected part 31p. Therefore, it is advantageous to reduce the thermal load in the area between the port collected part 31i and the port collected part 31p in the cylinder head 31.

Moreover, in the engine 2 according to this embodiment, as described using Figs. 5 and 6, since the structure is adopted in which the casing passage part 63 is connected to the opening 31u of the port collected part 31i, and the casing passage part 64 is connected to the opening 31v of the port collected part 31p, it is possible to reduce the exhaust resistance of exhaust gas discharged from the openings 31u and 31v.

Moreover, in the engine 2 according to this embodiment, as described using Fig. 1, since the turbine 62 of the turbocharger 6 is provided to the casing collected part 65 connected to the casing passage part 63 and the casing passage part 64, downstream in the exhaust gas flow direction, it can collect kinetic energy of the exhaust gas to improve the efficiency.

Moreover, in the engine 2 according to this embodiment, since the ECU 10 performs the fuel injection alternately over time to the cylinders 3a-3c belonging to the first cylinder group 3A and the cylinders 3d-3f belonging to the second cylinder group 3B, it can reduce the exhaust interference to achieve a higher exhaust efficiency.

As described above, the engine 2 according to this embodiment is provided in the cylinder head 31 with the two exhaust port groups 31A and 31B having the port collected parts 31i and 31p, respectively, and reduces the thermal load in the area between the port collected part 31i and the port collected part 31p in the cylinder head 31.

### [Modification]

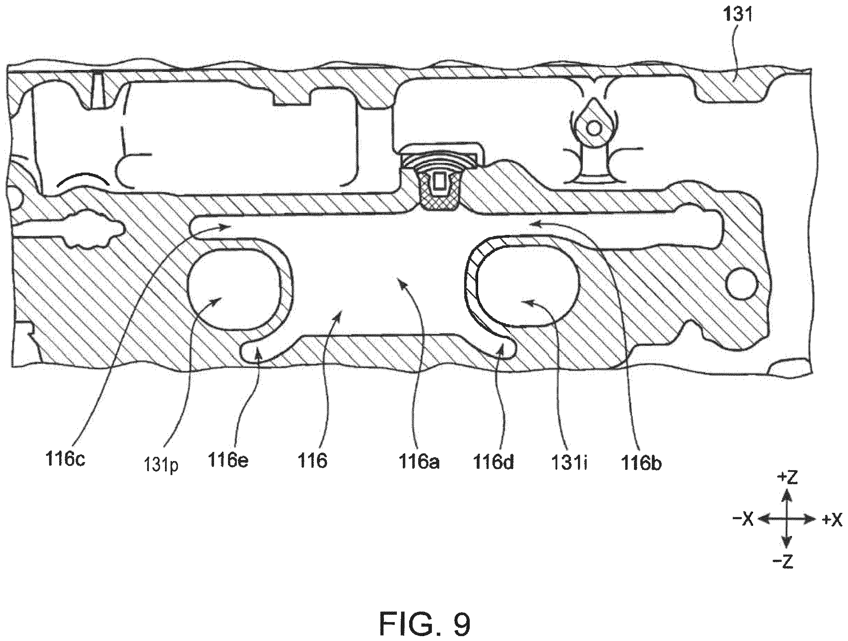

A structure of a multi-cylinder engine according to one modification is described using Fig. 9. Fig. 9 is a view corresponding to Fig. 8 used for the description of the previous embodiment, where a spatial relationship between a port collected part 131i and a port collected part 131p of a cylinder head 131, and an exhaust-side water jacket 116 is schematically illustrated in cross section.

Note that in the multi-cylinder engine according to this modification, since it has the same structure as the previous embodiment except for parts particularly described below, and therefore, the repeating description will be omitted.

As illustrated in Fig. 9, the cylinder head 131 according to this modification is also provided with the port collected part 131i of a first exhaust port group, the port collected part 131p of a second exhaust port group, which are separated from each other in the X-directions. Each of the port collected parts 131i and 131p extends in a direction perpendicular to the drawing sheet.

The cylinder head 131 is also provided with an exhaust-side water jacket 116 having an intermediate passage part 116a which is formed in an area between the port collected part 131i and the port collected part 131p in the X-directions. Moreover, the exhaust-side water jacket 116 has an upper passage part 116b formed in an area on the +Z side of the port collected part 131i, and an upper passage part 116c formed in an area on the +Z side of the port collected part 131p. In other words, the exhaust-side water jacket 116 includes at leaset one of the upper passage part 116b formed above the port collected part 131i, and the upper passage part 116c formed above the port collected part 131p.

Further, in the cylinder head 131 of the multi-cylinder engine according to this modification, the exhaust-side water jacket 116 has a lower passage part 116d formed in an area on the -Z side of the port collected part 131i, and a lower passage part 116e formed in an area on the -Z side of the port collected part 131p. In other words, the exhaust-side water jacket 116 includes at leaset one of the lower passage part 116d formed below the port collected part 131i, and the lower passage part 116e formed below the port collected part 131p.

In the exhaust-side water jacket 116, the upper passage parts 116b and 116c and the lower passage parts 116d and 116e are particularly formed continuous to the intermediate passage part 116a. Thus, the coolant WF which flows in the exhaust-side water jacket 116 also flows through the upper passage parts 116b and 116c and the lower passage parts 116d and 116e.

The multi-cylinder engine according to this modification has the following effects because it is provided in the cylinder head 131 of the engine body with the exhaust-side water jacket 116 having the above structure, in addition to the effects of the multi-cylinder engine 2 according to the previous embodiment.

In the multi-cylinder engine according to this modification, since the exhaust-side water jacket 116 has the lower passage parts 116d and 116e in addition to the intermediate passage part 116a and the upper passage parts 116b and 116c, heat transmitted to the -Z side from the port collected part 131i of the first exhaust port group and heat transmitted to the -Z side from the port collected part 131p of the second exhaust port group are absorbed by the lower passage parts 116d and 116e. Therefore, the multi-cylinder engine according to this modification also reduces the thermal load at the -Z side parts of the respective areas in the cylinder head 131 where the port collected part 131i and the port collected part 131p are provided.

### [Other Modifications]

Although in the above embodiment and modification, the coolant is used as one example of the cooling medium, the present disclosure is not limited to the coolant. For example, the cylinder head and the cylinder block may also be cooled using a gas or a gas-liquid mixture.

Although in the above embodiment and modification, the intermediate passage parts 16a and 116a formed respectively between the port collected parts 31i and 131i and the port collected parts 31p and 131p are described, in the present disclosure, the passage parts of the water jacket may be provided so that the passage parts are located adjacent to other parts of the first exhaust port group 31A and the second exhaust port group 31B.

Although in the above embodiment and modification, the intermediate passage parts 16a and 116a are formed as parts of the exhaust-side water jackets 16 and 116, the present disclosure is not limited to this structure. For example, another water jacket which is separately formed from the exhaust-side water jacket may be provided in the cylinder head, and it may cool exhaust gas which passes through the port collected part.

Although in the above embodiment and modification the HP-EGR passage 71 is branched from the exhaust port 31c inside the cylinder heads 31 and 131, the present disclosure is not limited to this structure. For example, the EGR passage may also be branched from the exhaust-pipe part (corresponding to the "casing passage part 63" in the above embodiment) connected to the side surface part of the cylinder head.

Although in the above embodiment and modification, the structure in which the two exhaust ports are connected to one cylinder is adopted, the present disclosure is not limited to this structure. For example, other structures in which one exhaust port is connected to one cylinder, and three or more exhaust ports are connected to one cylinder, may also be adopted.

Although in the above embodiment and modification, the engine 2 is provided with a single turbocharger 6 as one example, the present disclosure is not limited to this structure. For example, a naturally aspirated engine without the turbocharger may also be adopted, or an engine with two or more turbochargers may also be adopted, or an engine with an electric supercharger, a mechanical supercharger, etc. may also be adopted.

Although in the above embodiment and modification, the 6-cylinder diesel engine is adopted as one example of the engine body 3, the present disclosure is not limited to this structure. For example, the number of cylinders may be four or five, or may be seven or more. Moreover, the engine may be a gasoline engine, or may be a V-type, W-type, or horizontally opposed engine, without being limited to the in-series engine.

It should be understood that the embodiments herein are illustrative and not restrictive, since the scope of the invention is defined by the appended claims rather than by the description preceding them, and all changes that fall within metes and bounds of the claims, are therefore intended to be embraced by the claims.

### DESCRIPTION OF REFERENCE CHARACTERS

2 Multi-Cylinder Engine
3 Engine Body
3A First Cylinder Group
3B Second Cylinder Group
3a-3f Cylinder
4 Intake System
5 Exhaust System
6 Turbocharger
16, 116 Exhaust-Side Water Jacket (Cooling Medium Passage)
16a, 116a Intermediate Passage Part
16b, 116b Upper Passage Part (First Upper Passage Part)
16c, 116c Upper Passage Part (Second Upper Passage Part)
31, 131 Cylinder Head
31A First Exhaust Port Group (First Exhaust Passage Group)
31B Second Exhaust Port Group (Second Exhaust Passage Group)
31c-31h, 31j-31o Exhaust Port (Independent Exhaust Passage Part)
31i, 31p, 131i, 131p Port Collected Part (Collective Exhaust Passage Part)
41 Intake Passage
63 Casing Passage Part (First Exhaust-pipe Part)
64 Casing Passage Part (Second Exhaust-pipe Part)
65 Casing Collected Part (Collective Exhaust-pipe Part)
116d Lower Passage Part (First Lower Passage Part)
116e Lower Passage Part (Second Lower Passage Part)

## Claims

1. A multi-cylinder engine (2) having an engine body (3) with a cylinder head (31; 131), comprising:
a first cylinder group (3A) provided to the engine body (3) and comprised of a first plurality of cylinders (3a, 3b, 3c) disposed adjacent to each other;
a second cylinder group (3B) provided to the engine body (3), comprised of a second plurality of cylinders (3d, 3e, 3f) disposed adjacent to each other, and provided adjacent to the first cylinder group (3A);
a first exhaust passage group (31A) having a first plurality of independent exhaust passage parts (31c-31h) provided to the cylinder head (31; 131) and connected to the first cylinder group (3A) or the first plurality of cylinders (3a, 3b, 3c), respectively, and a first collective exhaust passage part (31i; 131i) provided to the cylinder head (31; 131) and collecting the first plurality of independent exhaust passage parts (31c-31h) downstream in an exhaust gas flow direction;
a second exhaust passage group (31B) having a second plurality of independent exhaust passage parts (31j-31o) provided to the cylinder head (31; 131) and connected to the second cylinder group (3B) or the second plurality of cylinders (3d, 3e, 3f), respectively, and a second collective exhaust passage part (31p; 131p) provided to the cylinder head (31; 131) and collecting the second plurality of independent exhaust passage parts (31j-31o) downstream in the exhaust gas flow direction; and
a cooling medium passage (16; 116) provided in the cylinder head (31; 131), through which a cooling medium flows, and having an intermediate passage part (16a; 116a) provided between the first collective exhaust passage part (31i; 131i) and the second collective exhaust passage part (31p; 131p),
**characterized in that**
each of the first collective exhaust passage part (31i; 131i) and the second collective exhaust passage part (31p; 131p) has an opening (31u, 31v) in a side surface part of the cylinder head (31; 131),
in a plan view of the second exhaust passage group (31B) in cylinder axis directions, the opening (31v) of the second collective exhaust passage part (31p; 131p) is offset toward the first exhaust passage group (31A) in a lineup direction of the first plurality of independent exhaust passage parts (31c-31h), and
in a plan view of the first exhaust passage group (31A) in the cylinder axis directions, the opening (31u) of the first collective exhaust passage part (31i; 131i) is disposed closer to a center in the lineup direction of the first plurality of independent exhaust passage parts (31c-31h), compared with the opening (31v) of the second collective exhaust passage part (31p; 131p).

2. The multi-cylinder engine (2) of claim 1, wherein the cooling medium passage (16; 116) further includes at least one of:
a first upper passage part (16b; 116b) provided to at least an upper part of the first collective exhaust passage part (31i; 131i); and
a second upper passage part (16c; 116c) provided to at least an upper part of the second collective exhaust passage part (31p; 131p).

3. The multi-cylinder engine (2) of claim 1 or 2, wherein the cooling medium passage (116) further includes at least one of:
a first lower passage part (116d) provided to at least a lower part of the first collective exhaust passage part (131i); and
a second lower passage part (116e) provided to at least a lower part of the second collective exhaust passage part (131p).

4. The multi-cylinder engine (2) of any one of the preceding claims, further comprising:
a first exhaust-pipe part (63) connected to the opening (31u) of the first collective exhaust passage part (31i; 131i); and
a second exhaust-pipe part (64) connected to the opening (31v) of the second collective exhaust passage part (31p; 131p).

5. The multi-cylinder engine (2) of claim 4, further comprising:
a collective exhaust-pipe part (65) provided downstream in the exhaust gas flow direction of the first exhaust-pipe part (63) and the second exhaust-pipe part (64), and collecting the first exhaust-pipe part (63) and the second exhaust-pipe part (64); and
a turbocharger (6) provided downstream in the exhaust gas flow direction of the collective exhaust-pipe part (65).

6. The multi-cylinder engine (2) of any one of the preceding claims, wherein fuel is injected alternately over time to the first cylinder group (3A) and the second cylinder group (3B).

7. The multi-cylinder engine (2) of any one of the preceding claims, wherein the intermediate passage part (16a; 116a) is formed along the first collective exhaust passage part (31i; 131i).

8. The multi-cylinder engine (2) of any one of the preceding claims, wherein the intermediate passage part (16a; 116a) is formed close or adjacent to the first collective exhaust passage part (31i; 131i).

9. The multi-cylinder engine (2) of any one of the preceding claims, wherein the intermediate passage part (16a; 116a) is formed along the second collective exhaust passage part (31p; 131p)

10. The multi-cylinder engine (2) of any one of the preceding claims, wherein the intermediate passage part (16a; 116a) is formed close or adjacent to the second collective exhaust passage part (31p; 131p).

11. The multi-cylinder engine (2) of claim 1, wherein the cooling medium passage (16; 116) further includes at least one of
an upper passage part (16b, 16c; 116b, 116c) provided above the first collective exhaust passage part (31i; 131i) and/or the second collective exhaust passage part (31p; 131p), and
a lower passage part (116d, 116e) provided below the first collective exhaust passage part (131i) and/or the second collective exhaust passage part (131p).

12. The multi-cylinder engine (2) of any one of the preceding claims, further comprising injectiors configureed to inject fuel alternately to the first cylinder group (3A) and the second cylinder group (3B).

13. The multi-cylinder engine (2) of any one of the preceding claims, wherein the multi-cylinder engine (2) is to be mounted on a vehicle.

14. A cylinder head (31; 131) for a multi-cylinder engine (2) having an engine body (3), the engine body (3) including a first cylinder group (3A) comprised of a first plurality of cylinders (3a, 3b, 3c) disposed adjacent to each other, and a second cylinder group (3B) comprised of a second plurality of cylinders (3d, 3e, 3f) disposed adjacent to each other, and provided adjacent to the first cylinder group (3A), the cylinder head (31; 131) comprising:
a first exhaust passage group (31A) having a first plurality of independent exhaust passage parts (31c-31h) to be connected to the first cylinder group (3A) or the first plurality of cylinders (3a, 3b, 3c), respectively, and a first collective exhaust passage part (31i; 131i) collecting the first plurality of independent exhaust passage parts (31c-31h) downstream in an exhaust gas flow direction;
a second exhaust passage group (31B) having a second plurality of independent exhaust passage parts (31j-31o) to be connected to the second cylinder group (3B) or the second plurality of cylinders (3d, 3e, 3f), respectively, and a second collective exhaust passage part (31p; 131p) collecting the second plurality of independent exhaust passage parts (31j-31o) downstream in the exhaust gas flow direction; and
a cooling medium passage (16; 116) having an intermediate passage part (16a; 116a) provided between the first collective exhaust passage part (31i; 131i) and the second collective exhaust passage part (31p; 131p),
**characterized in that**
each of the first collective exhaust passage part (31i; 131i) and the second collective exhaust passage part (31p; 131p) has an opening (31u, 31v) in a side surface part of the cylinder head (31; 131),
in a plan view of the second exhaust passage group (31B) in cylinder axis directions, the opening (31v) of the second collective exhaust passage part (31p; 131p) is offset toward the first exhaust passage group (31A) in a lineup direction of the first plurality of independent exhaust passage parts (31c-31h), and
in a plan view of the first exhaust passage group (31A) in the cylinder axis directions, the opening (31u) of the first collective exhaust passage part (31i; 131i) is disposed closer to a center in the lineup direction of the first plurality of independent exhaust passage parts (31c-31h), compared with the opening (31v) of the second collective exhaust passage part (31p; 131p).

## Patentansprüche

1. Mehrzylindermotor (2), der einen Motorkörper (3) mit einem Zylinderkopf (31; 131) aufweist, umfassend:
eine erste Zylindergruppe (3A), die an dem Motorkörper (3) bereitgestellt ist und aus einer ersten Mehrzahl von Zylindern (3a, 3b, 3c) besteht, die angrenzend bzw. benachbart zueinander angeordnet sind;
eine zweite Zylindergruppe (3B), die an dem Motorkörper (3) bereitgestellt ist und aus einer zweiten Mehrzahl von Zylindern (3d, 3e, 3f) besteht, die angrenzend bzw. benachbart zueinander angeordnet sind und angrenzend bzw. benachbart zu der ersten Zylindergruppe (3A) bereitgestellt sind;
eine erste Abgastraktgruppe (31A) mit einer ersten Mehrzahl unabhängiger Abgastraktteile (31c-31h), die jeweils an dem Zylinderkopf (31; 131) bereitgestellt sind und mit der ersten Zylindergruppe (3A) oder der ersten Mehrzahl von Zylindern (3a, 3b, 3c) verbunden sind, und einem ersten Sammelabgasttraktteil (31i; 131i), der an dem Zylinderkopf (31; 131) bereitgestellt ist und die erste Mehrzahl unabhängiger Abgastraktteile (31c-31h) stromabwärts in einer Abgasströmungsrichtung sammelt;
eine zweite Abgastraktgruppe (31B) mit einer zweiten Mehrzahl unabhängiger Abgastraktteile (31j-31o), die jeweils an dem Zylinderkopf (31; 131) bereitgestellt sind und mit der zweiten Zylindergruppe (3B) oder der zweiten Mehrzahl von Zylindern (3d, 3e, 3f) verbunden sind, und einem zweiten Sammelabgasttraktteil (31p; 131p), der an dem Zylinderkopf (31; 131) bereitgestellt ist und die zweite Mehrzahl unabhängiger Abgastraktteile (31j-31o) stromabwärts in der Abgasströmungsrichtung sammelt; und
einen Kühlmediumtrakt (16; 116), der in dem Zylinderkopf (31; 131) bereitgestellt ist, durch den ein Kühlmedium fließt, und der einen Zwischentraktteil (16a; 116a) aufweist, der zwischen dem ersten Sammelabgasttraktteil (31i; 131i) und dem zweiten Sammelabgasttraktteil (31p; 131p) bereitgestellt ist,
**dadurch gekennzeichnet, dass**
jeder des ersten Sammelabgasttraktteils (31i; 13li) und des zweiten Sammelabgasttraktteils (31p; 131p) eine Öffnung (31u, 31v) in einem Seitenflächen- bzw. -oberflächenteil des Zylinderkopfes (31; 131) aufweist,
in einer Draufsicht der zweiten Abgastraktgruppe (31B) in Zylinderachsenrichtungen die Öffnung (31v) des zweiten Sammelabgasttraktteils (31p; 131p) zu der ersten Abgastraktgruppe (31A) hin versetzt ist, und zwar in einer Aufstellungsrichtung der ersten Mehrzahl unabhängiger Abgastraktteile (31c-31h), und
in einer Draufsicht der ersten Abgastraktgruppe (31A) in Zylinderachsrichtungen die Öffnung (31u) des ersten Sammelabgasttraktteils (31i; 131i) im Vergleich zu der Öffnung (31v) des zweiten Sammelabgasttraktteils (31p; 131p) näher an einer Mitte in der Aufstellungsrichtung der ersten Mehrzahl unabhängiger Abgastraktteile (31c-31h) angeordnet ist.

2. Mehrzylindermotor (2) nach Anspruch 1, wobei der Kühlmediumtrakt (16; 116) ferner zumindest eines umfasst:
einen ersten oberen Traktteil (16b; 116b), der an zumindest einem oberen Teil des ersten Sammelabgasttraktteils (31i; 131i) bereitgestellt ist; und
einen zweiten oberen Traktteil (16c; 116c), der an zumindest einem oberen Teil des zweiten Sammelabgasttraktteils (31p; 131p) bereitgestellt ist.

3. Mehrzylindermotor (2) nach Anspruch 1 oder 2, wobei der Kühlmediumtrakt (116) ferner zumindest eines umfasst:
einen ersten unteren Traktteil (116d), der an zumindest einem unteren Teil des ersten Sammelabgasttraktteils (131i) bereitgestellt ist; und
einen zweiten unteren Traktteil (116e), der an zumindest einem unteren Teil des zweiten Sammelabgasttraktteils (131p) bereitgestellt ist.

4. Mehrzylindermotor (2) nach einem der vorhergehenden Ansprüche, ferner umfassend:
einen ersten Abgasrohrteil (63), der mit der Öffnung (31u) des ersten Sammelabgasttraktteils (31i; 131i) verbunden ist; und
einen zweiten Abgasrohrteil (64), der mit der Öffnung (31v) des zweiten Sammelabgasttraktteils (31p; 131p) verbunden ist.

5. Mehrzylindermotor (2) nach Anspruch 4, ferner umfassend:
einen Sammelabgasrohrteil (65), der stromabwärts in der Abgasströmungsrichtung des ersten Abgasrohrteils (63) und des zweiten Abgasrohrteils (64) bereitgestellt ist und den ersten Abgasrohrteil (63) und den zweiten Abgasrohrteil (64) sammelt; und
einen Turbolader (6), der stromabwärts in der Abgasströmungsrichtung des Sammelabgasrohrteils (65) bereitgestellt ist.

6. Mehrzylindermotor (2) nach einem der vorhergehenden Ansprüche, wobei Kraftstoff abwechselnd mit der Zeit in die erste Zylindergruppe (3A) und die zweite Zylindergruppe (3B) eingespritzt wird.

7. Mehrzylindermotor (2) nach einem der vorhergehenden Ansprüche, wobei der Zwischentraktteil (16a; 116a) entlang des ersten Sammelabgasttraktteils (31i; 131i) ausgebildet ist.

8. Mehrzylindermotor (2) nach einem der vorhergehenden Ansprüche, wobei der Zwischentraktteil (16a; 116a) nahe an oder angrenzend bzw. benachbart zu dem ersten Sammelabgasttraktteil (31i; 131i) ausgebildet ist.

9. Mehrzylindermotor (2) nach einem der vorhergehenden Ansprüche, wobei der Zwischentraktteil (16a; 116a) entlang des zweiten Sammelabgasttraktteils (31p; 131p) ausgebildet ist.

10. Mehrzylindermotor (2) nach einem der vorhergehenden Ansprüche, wobei der Zwischentraktteil (16a; 116a) nahe an oder angrenzend bzw. benachbart zu dem zweiten Sammelabgastraktteil (31p; 131p) ausgebildet ist.

11. Mehrzylindermotor (2) nach Anspruch 1, wobei der Kühlmediumtrakt (16; 116) ferner zumindest eines enthält
einen oberen Traktteil (16b, 16c; 116b, 116c), der über dem ersten Sammelabgasttraktteil (31i; 131i) und/oder dem zweiten Sammelabgasttraktteil (31p; 131p) bereitgestellt ist, und
einen unteren Traktteil (116d, 116e), der unterhalb des ersten Sammelabgasttraktteils (131i) und/oder des zweiten Sammelabgasttraktteils (131p) bereitgestellt ist.

12. Mehrzylindermotor (2) nach einem der vorhergehenden Ansprüche, ferner umfassend Injektoren bzw. Einspritzvorrichtungen, die konfiguriert sind, Kraftstoff abwechselnd in die erste Zylindergruppe (3A) und die zweite Zylindergruppe (3B) einzuspritzen.

13. Mehrzylindermotor (2) nach einem der vorhergehenden Ansprüche, wobei der Mehrzylindermotor (2) an einem Fahrzeug zu montieren ist.

14. Zylinderkopf (31; 131) für einen Mehrzylindermotor (2), der einen Motorkörper (3) aufweist, wobei der Motorkörper (3) eine erste Zylindergruppe (3A), die aus einer ersten Mehrzahl von Zylindern (3a, 3b, 3c) besteht, die angrenzend bzw. benachbart zueinander angeordnet sind, und eine zweite Zylindergruppe (3B) enthält, die aus einer zweiten Mehrzahl von Zylindern (3d, 3e, 3f) besteht, die angrenzend bzw. benachbart zueinander angeordnet sind und angrenzend bzw. benachbart zu der ersten Zylindergruppe (3A) bereitgestellt sind, wobei der Zylinderkopf (31; 131) umfasst:
eine erste Abgastraktgruppe (31A) mit einer ersten Mehrzahl unabhängiger Abgastraktteile (31c-31h), die jeweils mit der ersten Zylindergruppe (3A) oder der ersten Mehrzahl von Zylindern (3a, 3b, 3c) zu verbinden sind, und einem ersten Sammelabgasttraktteil (31i; 131i), der die erste Mehrzahl unabhängiger Abgastraktteile (31c-31h) stromabwärts in einer Abgasströmungsrichtung sammelt;
eine zweite Abgastraktgruppe (31B) mit einer zweiten Mehrzahl unabhängiger Abgastraktteile (31j-31o), die jeweils mit der zweiten Zylindergruppe (3B) oder der zweiten Mehrzahl von Zylindern (3d, 3e, 3f) zu verbinden sind, und einem zweiten Sammelabgasttraktteil (31p; 131p), der die zweite Mehrzahl unabhängiger Abgastraktteile (31j-31o) stromabwärts in der Abgasströmungsrichtung sammelt; und einen Kühlmediumtrakt (16; 116) mit einem Zwischentraktteil (16a; 116a), der zwischen dem ersten Sammelabgasttraktteil (31i; 131i) und dem zweiten Sammelabgasttraktteil (31p; 131p) bereitgestellt ist,
**dadurch gekennzeichnet, dass**
jeder des ersten Sammelabgasttraktteils (31i; 13li) und des zweiten Sammelabgasttraktteils (31p; 131p) eine Öffnung (31u, 31v) in einem Seitenflächen- bzw. -oberflächenteil des Zylinderkopfes (31; 131) aufweist,
in einer Draufsicht der zweiten Abgastraktgruppe (31B) in Zylinderachsenrichtungen die Öffnung (31v) des zweiten Sammelabgasttraktteils (31p; 131p) zu der ersten Abgastraktgruppe (31A) hin versetzt ist, und zwar in einer Aufstellungsrichtung der ersten Mehrzahl unabhängiger Abgastraktteile (31c-31h), und
in einer Draufsicht der ersten Abgastraktgruppe (31A) in Zylinderachsrichtungen die Öffnung (31u) des ersten Sammelabgasttraktteils (31i; 131i) im Vergleich zu der Öffnung (31v) des zweiten Sammelabgasttraktteils (31p; 131p) näher an einer Mitte in der Aufstellungsrichtung der ersten Mehrzahl unabhängiger Abgastraktteile (31c-31h) angeordnet ist.

## Revendications

1. Moteur multicylindre (2) ayant un corps de moteur (3) avec une tête de cylindre (31 ; 131), comprenant :
un premier groupe de cylindres (3A) prévu sur le corps de moteur (3) et constitué d'une première pluralité de cylindres (3a, 3b, 3c) disposés de manière adjacente l'un à l'autre ;
un second groupe de cylindres (3B) prévu sur le corps de moteur (3), constitué d'une seconde pluralité de cylindres (3d, 3e, 3f) disposés de manière adjacente l'un à l'autre, et prévu de manière adjacente au premier groupe de cylindres (3A) ;
un premier groupe de passages d'échappement (31A) ayant une première pluralité de parties de passage d'échappement indépendantes (31c à 31h) prévues sur la tête de cylindre (31 ; 131) et connectées au premier groupe de cylindres (3A) ou à la première pluralité de cylindres (3a, 3b, 3c), respectivement, et une première partie de passage d'échappement collective (31i ; 131i) prévue sur la tête de cylindre (31 ; 131) et recueillant la première pluralité de parties de passage d'échappement indépendantes (31c à 31h) en aval dans une direction d'écoulement de gaz d'échappement ;
un second groupe de passages d'échappement (31B) ayant une seconde pluralité de parties de passage d'échappement indépendantes (31j à 31o) prévues sur la tête de cylindre (31 ; 131) et connectées au second groupe de cylindres (3B) ou à la seconde pluralité de cylindres (3d, 3e, 3f), respectivement, et une seconde partie de passage d'échappement collective (31p ; 131p) prévue sur la tête de cylindre (31 ; 131) et recueillant la seconde pluralité de parties de passage d'échappement indépendantes (31j à 31o) en aval dans la direction d'écoulement de gaz d'échappement ; et
un passage d'agent de refroidissement (16 ; 116) prévu dans la tête de cylindre (31 ; 131), à travers lequel un agent de refroidissement s'écoule, et ayant une partie de passage intermédiaire (16a ; 116a) prévue entre la première partie de passage d'échappement collective (31i ; 131i) et la seconde partie de passage d'échappement collective (31p ; 131p),
**caractérisé en ce que**
chacune de la première partie de passage d'échappement collective (31i ; 131i) et la seconde partie de passage d'échappement collective (31p ; 131p) a une ouverture (31u, 31v) dans une partie de surface latérale de la tête de cylindre (31 ; 131),
dans une vue en plan du second groupe de passages d'échappement (31B) dans des directions d'axe de cylindre, l'ouverture (31v) de la seconde partie de passage d'échappement collective (31p ; 131p) est décalée vers le premier groupe de passages d'échappement (31A) dans une direction d'alignement de la première pluralité de parties de passage d'échappement indépendantes (31c à 31h), et
dans une vue en plan du premier groupe de passages d'échappement (31A) dans les directions d'axe de cylindre, l'ouverture (31u) de la première partie de passage d'échappement collective (31i ; 131i) est disposée plus près d'un centre dans la direction d'alignement de la première pluralité de parties de passage d'échappement indépendantes (31c à 31h), par rapport à l'ouverture (31v) de la seconde partie de passage d'échappement collective (31p ; 131p).

2. Moteur multicylindre (2) selon la revendication 1, dans lequel le passage d'agent de refroidissement (16 ; 116) inclut en outre au moins un élément parmi :
une première partie de passage supérieure (16b ; 116b) prévue sur au moins une partie supérieure de la première partie de passage d'échappement collective (31i ; 131i) ; et
une seconde partie de passage supérieure (16c ; 116c) prévue sur au moins une partie supérieure de la seconde partie de passage d'échappement collective (31p; 131p).

3. Moteur multicylindre (2) selon la revendication 1 ou 2, dans lequel le passage d'agent de refroidissement (116) inclut en outre au moins un élément parmi :
une première partie de passage inférieure (116d) prévue sur au moins une partie inférieure de la première partie de passage d'échappement collective (131i) ; et
une seconde partie de passage inférieure (116e) prévue sur au moins une partie inférieure de la seconde partie de passage d'échappement collective (131p).

4. Moteur multicylindre (2) selon l'une quelconque des revendications précédentes, comprenant en outre :
une première partie de tuyau d'échappement (63) connectée à l'ouverture (31u) de la première partie de passage d'échappement collective (31i ; 131i) ; et
une seconde partie de tuyau d'échappement (64) connectée à l'ouverture (31v) de la seconde partie de passage d'échappement collective (31p ; 131p).

5. Moteur multicylindre (2) selon la revendication 4, comprenant en outre :
une partie de tuyau d'échappement collective (65) prévue en aval dans la direction d'écoulement de gaz d'échappement de la première partie de tuyau d'échappement (63) et la seconde partie de tuyau d'échappement (64), et recueillant la première partie de tuyau d'échappement (63) et la seconde partie de tuyau d'échappement (64) ; et
un turbocompresseur de suralimentation (6) prévu en aval dans la direction d'écoulement de gaz d'échappement de la partie de tuyau d'échappement collective (65).

6. Moteur multicylindre (2) selon l'une quelconque des revendications précédentes, dans lequel du carburant est injecté en alternance dans le temps au premier groupe de cylindres (3A) et au second groupe de cylindres (3B).

7. Moteur multicylindre (2) selon l'une quelconque des revendications précédentes, dans lequel la partie de passage intermédiaire (16a ; 116a) est formée le long de la première partie de passage d'échappement collective (31i ; 131i).

8. Moteur multicylindre (2) selon l'une quelconque des revendications précédentes, dans lequel la partie de passage intermédiaire (16a ; 116a) est formée près de ou de manière adjacente à la première partie de passage d'échappement collective (31i ; 131i).

9. Moteur multicylindre (2) selon l'une quelconque des revendications précédentes, dans lequel la partie de passage intermédiaire (16a ; 116a) est formée le long de la seconde partie de passage d'échappement collective (31p ; 131p).

10. Moteur multicylindre (2) selon l'une quelconque des revendications précédentes, dans lequel la partie de passage intermédiaire (16a ; 116a) est formée près de ou de manière adjacente à la seconde partie de passage d'échappement collective (31p; 131p).

11. Moteur multicylindre (2) selon la revendication 1, dans lequel le passage d'agent de refroidissement (16 ; 116) inclut en outre au moins un élément parmi une partie de passage supérieure (16b, 16c ; 116b, 116c) prévue au-dessus de la première partie de passage d'échappement collective (31i ; 131i) et/ou la seconde partie de passage d'échappement collective (31p ; 131p), et
une partie de passage inférieure (116d, 116e) prévue en dessous de la première partie de passage d'échappement collective (131i) et/ou la seconde partie de passage d'échappement collective (131p).

12. Moteur multicylindre (2) selon l'une quelconque des revendications précédentes, comprenant en outre des injecteurs configurés pour injecter du carburant en alternance au premier groupe de cylindres (3A) et au second groupe de cylindres (3B).

13. Moteur multicylindre (2) selon l'une quelconque des revendications précédentes, dans lequel le moteur multicylindre (2) doit être monté sur un véhicule.

14. Tête de cylindre (31 ; 131) pour un moteur multicylindre (2) ayant un corps de moteur (3), le corps de moteur (3) incluant un premier groupe de cylindres (3A) constitué d'une première pluralité de cylindres (3a, 3b, 3c) disposés de manière adjacente l'un à l'autre, et un second groupe de cylindres (3B) constitué d'une seconde pluralité de cylindres (3d, 3e, 3f) disposés de manière adjacente l'un à l'autre, et prévu de manière adjacente au premier groupe de cylindres (3A), la tête de cylindre (31 ; 131) comprenant :
un premier groupe de passages d'échappement (31A) ayant une première pluralité de parties de passage d'échappement indépendantes (31c à 31h) devant être connectées au premier groupe de cylindres (3A) ou à la première pluralité de cylindres (3a, 3b, 3c), respectivement, et une première partie de passage d'échappement collective (31i ; 131i) recueillant la première pluralité de parties de passage d'échappement indépendantes (31c à 31h) en aval dans une direction d'écoulement de gaz d'échappement ;
un second groupe de passages d'échappement (31B) ayant une seconde pluralité de parties de passage d'échappement indépendantes (31j à 31o) devant être connectées au second groupe de cylindres (3B) ou à la seconde pluralité de cylindres (3d, 3e, 3f), respectivement, et une seconde partie de passage d'échappement collective (31p ; 131p) recueillant la seconde pluralité de parties de passage d'échappement indépendantes (31j à 31o) en aval dans la direction d'écoulement de gaz d'échappement ; et
un passage d'agent de refroidissement (16 ; 116) ayant une partie de passage intermédiaire (16a; 116a) prévue entre la première partie de passage d'échappement collective (31i; 131i) et la seconde partie de passage d'échappement collective (31p ; 131p),
**caractérisée en ce que**
chacune de la première partie de passage d'échappement collective (31i ; 131i) et la seconde partie de passage d'échappement collective (31p ; 131p) a une ouverture (31u, 31v) dans une partie de surface latérale de la tête de cylindre (31 ; 131),
dans une vue en plan du second groupe de passages d'échappement (31B) dans des directions d'axe de cylindre, l'ouverture (31v) de la seconde partie de passage d'échappement collective (31p ; 131p) est décalée vers le premier groupe de passages d'échappement (31A) dans une direction d'alignement de la première pluralité de parties de passage d'échappement indépendantes (31c à 31h), et
dans une vue en plan du premier groupe de passages d'échappement (31A) dans les directions d'axe de cylindre, l'ouverture (31u) de la première partie de passage d'échappement collective (31i ; 131i) est disposée plus près d'un centre dans la direction d'alignement de la première pluralité de parties de passage d'échappement indépendantes (31c à 31h), par rapport à l'ouverture (31v) de la seconde partie de passage d'échappement collective (31p ; 131p).
